# EUROPEAN PATENT APPLICATION

(11) **EP 4 786 074 A1**
(43) Date of publication of application: **05.08.2026**
(21) Application number: 26153108.1
(22) Date of filing: 21.01.2026
(51) Int. Cl.: B22F 10/14, B22F 10/28, B22F 10/73, B22F 12/00, B22F 12/63, B22F 12/90, B29C 64/153, B29C 64/165, B29C 64/218, B29C 64/232, B29C 64/255, B29C 64/321, B29C 64/357, B33Y 10/00, B33Y 30/00, B33Y 40/00

(54) **BUILD MATERIAL ESCAPEMENT ASSEMBLY AND ADDITIVE MANUFACTURING SYSTEMS INCLUDING SAME**

(30) Priority: 04.02.2025 US 202519044792
(71) Applicant: General Electric Company, Cincinnati, Ohio 45215 (US)
(72) Inventor: STERLE, John, Evendale, Ohio, 45215 (US)
(74) Representative: Hafner & Kohl PartmbB

(57) **Abstract**

A build material escapement assembly (300) for an additive manufacturing system (100) includes a base (302) defining a cavity (304) and an aperture (306) opening into the cavity (304), a diaphragm (312) extending across the aperture (306) and coupled to the base (302), and a retractable plate (316) disposed within the cavity (304) and coupled to the diaphragm (312). The build material escapement assembly (300) further includes a post (320) disposed within the cavity (304) beneath the diaphragm (312) and coupled to the retractable plate (316), the post (320) supported by the base (302) and movable with the retractable plate (316) between a retracted position and an extended position. The build material escapement assembly (300) further includes a drive assembly (328) coupled to the post (320) to move the post (320) between the retracted position and the extended position.

## Description

### TECHNICAL FIELD

The present specification generally relates to additive manufacturing systems and, more specifically, to build material escapements of additive manufacturing systems for maintaining uniform build layers.

### BACKGROUND

Additive manufacturing systems may be utilized to "build" an object from build material, such as organic or inorganic powders, in a layer-wise manner. Conventional additive manufacturing systems include various "recoat" apparatuses that are configured to sequentially distribute layers of build material, such that a binder material can be deposited and cured to "build" an object. However, conventional recoat apparatuses may inconsistently distribute build material, leading to variation in the objects built by the additive manufacturing system. More particularly, the inconsistent distribution of build material may result in regions of excess build material being formed near the perimeter of a build area on which the build material is distributed. Accordingly, a need exists for a means of managing excess build material that is accumulated during the distribution process and ensuring that build material is accurately and consistently distributed during additive manufacturing processes.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts an additive manufacturing system including a build material escapement assembly, according to one or more embodiments shown and described herein;
FIG. 2A schematically depicts a recoat assembly of the additive manufacturing system of FIG. 1, according to one or more embodiments shown and described herein;
FIG. 2B schematically depicts an alternate embodiment of the recoat assembly of FIG. 2A, according to one or more embodiments shown and described herein;
FIG. 3 schematically depicts the additive manufacturing machine of FIG. 1 during a forward recoat of a build material distribution process, according to one or more embodiments shown and described herein;
FIG. 4 schematically depicts the additive manufacturing assembly of FIG. 1 providing excess build material into the build material escapement assembly, according to one or more embodiments shown and described herein;
FIG. 5 schematically depicts a top perspective view of the build material escapement assembly of FIG. 1 in an extended state, according to one or more embodiments shown and described herein;
FIG. 6 schematically depicts a top perspective view of the build material escapement assembly of FIG. 1, showing the top plate in a retracted state, according to one or more embodiments shown and described herein;
FIG. 7 schematically depicts a bottom perspective view of the build material escapement assembly of FIG. 1 in an extended state, according to one or more embodiments shown and described herein;
FIG. 8 schematically depicts a bottom perspective view of the build material escapement assembly of FIG. 1 in a retracted state, according to one or more embodiments shown and described herein;
FIG. 9 schematically depicts a cross-sectional view of the build material escapement assembly of FIG. 1 taken along line 9-9 in FIG. 5, according to one or more embodiments shown and described herein;
FIG. 10 schematically depicts a cross-sectional view of the build material escapement assembly taken along line 10-10 in FIG. 7, according to one or more embodiments shown and described herein;
FIG. 11 schematically depicts a cross-sectional view of the build material escapement assembly taken along line 11-11 in FIG. 7, according to one or more embodiments shown and described herein; and
FIG. 12 schematically depicts a cross-sectional view of the build material escapement assembly taken along line 12-12 in FIG. 8, according to one or more embodiments shown and described herein.

### DETAILED DESCRIPTION

Embodiments described herein are directed to build material escapement assemblies for an additive manufacturing system. Build material escapement assemblies may include a base defining a cavity and an aperture opening into the cavity, a diaphragm extending at least partially across the aperture and coupled to the base, and a plate disposed within the cavity and coupled to the diaphragm. Build material escapement assemblies may further include a post disposed within the cavity beneath the diaphragm and coupled to the plate, the post supported by the base and movable with the plate between a retracted position and an extended position. Build material escapement assemblies may further include a drive assembly coupled to the post and configured to move the post between the retracted position and the extended position.

Previous build material escapement assemblies utilize a bladder that inflates to move a top plate between an extended position and a retracted position. However, repeated inflations and deflations create stress on the bladder that can result in failure of the bladder. Moreover, determining the position of the top plate based upon the inflation of the bladder requires precise pressure control, which can be difficult and expensive to calibrate and control. The embodiments described herein overcome these limitations by utilizing the drive assembly coupled to the post and configured to move the post between the retracted position and the extended position. The mechanical engagement between the drive assembly and the post allows for precise control of the position of the plate. Various embodiments of the build material escapement assemblies and additive manufacturing systems, and the operation of the build material escapement assemblies and additive manufacturing systems are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

The term "coupled" as used herein may refer to a direct engagement between components as well an indirect engagement through through one or more intermediate components.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

Embodiments described herein are generally directed to build material escapement assemblies for additive manufacturing systems. Additive manufacturing systems may generally "build" materials through successive deposition and binding of build material. In conventional additive manufacturing systems, deposition of build material is a difficult, dirty, time-consuming, and error-prone process. Furthermore, conventional additive manufacturing systems may struggle to evenly distribute build material across a build area, which may result in excess build material accumulating at the edges of the build area. Embodiments described herein are directed to build material escapement assemblies that receive excess build material and resupply the build material to the additive manufacturing system in a consistent and configurable manner.

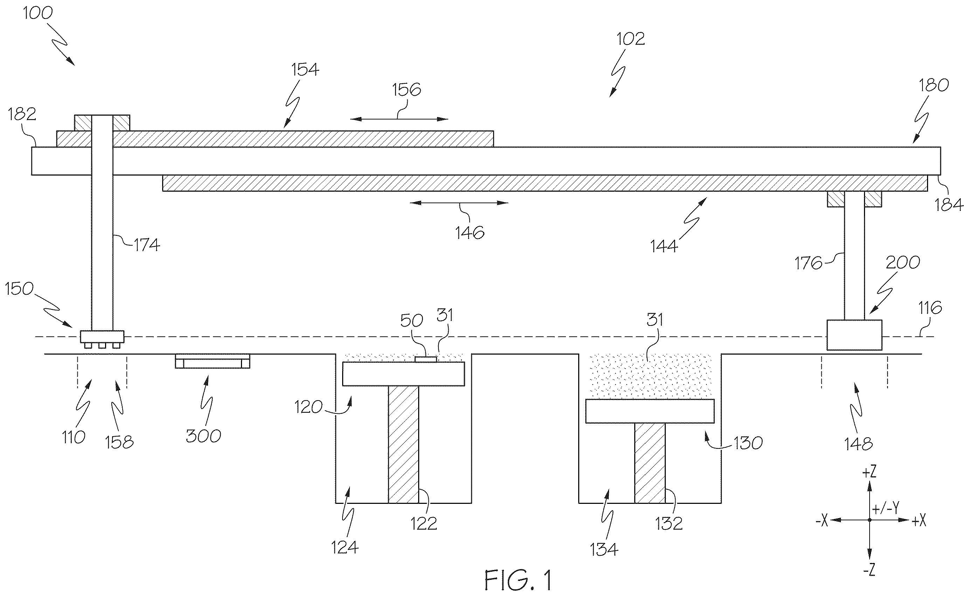

Referring now to FIG. 1, an embodiment of an additive manufacturing system 100 is schematically depicted. The additive manufacturing system 100 includes a cleaning station 110, a build area 124 for receiving build material 31, a supply platform 130 for supplying the build material 31 to the additive manufacturing system 100, an actuator assembly 102, and a build material escapement assembly 300. The actuator assembly 102 includes, among other elements, a recoat assembly 200 for distributing the build material 31 and a print head 150 for depositing binder material 50. The actuator assembly 102 is constructed to facilitate traversing the recoat assembly 200 and the print head 150 over a working axis 116 of the additive manufacturing system 100 independent of one another. This allows for at least some steps of the additive manufacturing process to be performed simultaneously thereby reducing the overall cycle time of the additive manufacturing process to less than the sum of the cycle time for each individual step. In some embodiments of the additive manufacturing system 100 described herein, the working axis 116 of the additive manufacturing system 100 is parallel to the +/- X axis of the coordinate axes depicted in the figures. It should be understood that the components of the additive manufacturing system 100 traversing the working axis 116, such as the print head 150, the recoat assembly 200, and the like, need not be centered on the working axis 116.

In some embodiments described herein, the cleaning station 110, the build area 124, the supply platform 130, and the build material escapement assembly 300 are positioned in series along the working axis 116 of the additive manufacturing system 100 between a print home position 158 of the print head 150 located proximate an end of the working axis 116 in the - X direction, and a recoat home position 148 of the recoat assembly 200 located proximate an end of the working axis 116 in the + X direction. That is, the print home position 158 and the recoat home position 148 are spaced apart from one another in a horizontal direction that is parallel to the +/X axis of the coordinate axes depicted in the figures and the cleaning station 110, the build area 124, the supply platform 130, and the build material escapement assembly 300 are positioned therebetween. In some embodiments described herein, the build area 124 is positioned between the build material escapement assembly 300 and the supply platform 130 along the working axis 116 of the additive manufacturing system 100.

The cleaning station 110 is positioned proximate one end of the working axis 116 of the additive manufacturing system 100 and is co-located with the print home position 158 where the print head 150 is located or "parked" before and after depositing binder material 50 on a layer of build material 31 positioned on the build area 124. The cleaning station 110 may include one or more cleaning sections (not shown) to facilitate cleaning the print head 150 between depositing operations. The cleaning sections may include, for example and without limitation, a soaking station containing a cleaning solution for dissolving excess binder material 50 on the print head 150, a wiping station for removing excess binder material 50 from the print head 150, a jetting station for purging binder material 50 and cleaning solution from the print head 150, a park station for maintaining moisture in the nozzles of the print head 150, or various combinations thereof. The print head 150 may be transitioned between the cleaning sections by the actuator assembly 102.

While reference is made herein to additive manufacturing systems including a print head 150 that dispenses a binder material 50, it should be understood that recoat assemblies 200 described herein may be utilized with other suitable additive powder-based additive manufacturing systems. For example, in some embodiments, instead of building objects with a cured binder material 50 applied to build material 31, in some embodiments, a laser or other energy source may be applied to the build material 31 to fuse the build material 31.

In the embodiment depicted in FIG. 1, the build area 124 includes a receptacle including a build platform 120. The build platform 120 is coupled to a build platform actuator 122 to facilitate raising and lowering the build platform 120 relative to the working axis 116 of the additive manufacturing system 100 in a vertical direction (i.e., a direction parallel to the +/- Z axis of the coordinate axes depicted in the figures). The build platform actuator 122 may be, for example and without limitation, a mechanical actuator, an electro-mechanical actuator, a pneumatic actuator, a hydraulic actuator, or any other actuator suitable for imparting linear motion to the build platform 120 in a vertical direction. Suitable actuators may include, without limitation, a worm drive actuator, a ball screw actuator, a pneumatic piston, a hydraulic piston, an electro-mechanical linear actuator, or the like. The build platform 120 and build platform actuator 122 are positioned in the build area 124 located below the working axis 116 (i.e., in the - Z direction of the coordinate axes depicted in the figures) of the additive manufacturing system 100. During operation of the additive manufacturing system 100, the build platform 120 is retracted into the build area 124 by action of the build platform actuator 122 after each layer of binder material 50 is deposited on the build material 31 located on build platform 120. While the build area 124 described and depicted herein includes a receptacle, it should be understood that the build area 124 may include any suitable structure for supporting build material 31, and may for example include a mere surface supporting the build material 31.

The supply platform 130 is coupled to a supply platform actuator 132 to facilitate raising and lowering the supply platform 130 relative to the working axis 116 of the additive manufacturing system 100 in a vertical direction (i.e., a direction parallel to the +/- Z axis of the coordinate axes depicted in the figures). The supply platform actuator 132 may be, for example and without limitation, a mechanical actuator, an electro-mechanical actuator, a pneumatic actuator, a hydraulic actuator, or any other actuator suitable for imparting linear motion to the supply platform 130 in the vertical direction. Suitable actuators may include, without limitation, a worm drive actuator, a ball screw actuator, a pneumatic piston, a hydraulic piston, an electro-mechanical linear actuator, or the like. The supply platform 130 and supply platform actuator 132 are positioned in a supply receptacle 134 located below the working axis 116 (i.e., in the - Z direction of the coordinate axes depicted in the figures) of the additive manufacturing system 100. During operation of the additive manufacturing system 100, the supply platform 130 is raised relative to the supply receptacle 134 and towards the working axis 116 of the additive manufacturing system 100 by action of the supply platform actuator 132 after a layer of build material 31 is distributed from the supply platform 130 to the build platform 120.

In embodiments, the actuator assembly 102 generally includes a recoat assembly transverse actuator 144, a print head actuator 154, a first guide 182, and a second guide 184. The recoat assembly transverse actuator 144 is operably coupled to the recoat assembly 200 and is operable to move the recoat assembly 200 relative to the build platform 120 to dispense build material 31 on the build platform 120. The print head actuator 154 is operably coupled to the print head 150 and is operable to move the print head 150 relative to the build platform 120 to dispense the binder material 50 on the build platform 120.

In some embodiments described herein, the first guide 182 and the second guide 184 extend in a horizontal direction (i.e., a direction parallel to the +/- X axis of the coordinate axes depicted in the figures) parallel to the working axis 116 of the additive manufacturing system 100 and are spaced apart from one another in the vertical direction. When the actuator assembly 102 is positioned over the cleaning station 110, the build platform 120, the supply platform 130, and the build material escapement assembly 300, as depicted in FIG. 1, the first guide 182 and the second guide 184 extend in a horizontal direction from at least the cleaning station 110 to beyond the supply platform 130.

In the embodiment of the actuator assembly 102 depicted in FIG. 1, the first guide 182 and the second guide 184 are opposite sides of a rail 180 that extends in a horizontal direction and is oriented such that the first guide 182 is positioned above and spaced apart from the second guide 184. For example, in one embodiment, the rail 180 has an "I" configuration in vertical cross section (i.e., a cross section in the Y-Z plane of the coordinate axes depicted in the figures) with upper and lower flanges of the "I" forming the first guide 182 and the second guide 184, respectively. However, it should be understood that other embodiments are contemplated and possible. For example and without limitation, the first guide 182 and the second guide 184 may be separate structures, such as separate rails, extending in the horizontal direction and spaced apart from one another in the vertical direction. In some embodiments, the first guide 182 and the second guide 184 may be positioned at the same height and spaced apart from one another on opposite sides of the rail 180. In embodiments, the first guide 182 and the second guide 184 are positioned in any suitable configuration, and may be collinear.

In some embodiments described herein, the recoat assembly transverse actuator 144 is coupled to one of the first guide 182 and the second guide 184, and the print head actuator 154 is coupled to the other of the first guide 182 and the second guide 184 such that the recoat assembly transverse actuator 144 and the print head actuator 154 are arranged in a "stacked" configuration. For example, in the embodiment of the actuator assembly 102 depicted in FIG. 1, the recoat assembly transverse actuator 144 is coupled to the second guide 184 and the print head actuator 154 is coupled to the first guide 182. However, it should be understood that, in other embodiments, the recoat assembly transverse actuator 144 may be coupled to the first guide 182 and the print head actuator 154 may be coupled to the second guide 184.

In some embodiments described herein, the recoat assembly transverse actuator 144 is bi-directionally actuatable along a recoat motion axis 146 and the print head actuator 154 is bi-directionally actuatable along a print motion axis 156. That is, the recoat motion axis 146 and the print motion axis 156 define the axes along which the recoat assembly transverse actuator 144 and the print head actuator 154 are actuatable, respectively. The recoat motion axis 146 and the print motion axis 156 extend in a horizontal direction and are parallel with the working axis 116 of the additive manufacturing system 100. In some embodiments described herein, the recoat motion axis 146 and the print motion axis 156 are parallel with one another and spaced apart from one another in the vertical direction due to the stacked configuration of the recoat assembly transverse actuator 144 and the print head actuator 154. In some embodiments, such as the embodiment of the actuator assembly 102 depicted in FIG. 1, the recoat motion axis 146 and the print motion axis 156 are located in the same vertical plane (i.e., a plane parallel to the X-Z plane of the coordinate axes depicted in the figures). However, it should be understood that other embodiments are contemplated and possible, such as embodiments in which the recoat motion axis 146 and the print motion axis 156 are located in different vertical planes.

In some embodiments described herein, the recoat assembly transverse actuator 144 and the print head actuator 154 may be, for example and without limitation, mechanical actuators, electro-mechanical actuators, pneumatic actuators, hydraulic actuators, or any other actuator suitable for providing linear motion. Suitable actuators may include, without limitation, worm drive actuators, ball screw actuators, pneumatic pistons, hydraulic pistons, electro-mechanical linear actuators, or the like.

In embodiments, the recoat assembly transverse actuator 144 and the print head actuator 154 may each be a cohesive sub-system that is affixed to the rail 180. However, it should be understood that other embodiments are contemplated and possible, such as embodiments where the recoat assembly transverse actuator 144 and the print head actuator 154 include multiple components that are individually assembled onto the rail 180 to form the recoat assembly transverse actuator 144 and the print head actuator 154, respectively.

Still referring to FIG. 1, the recoat assembly 200 is coupled to the recoat assembly transverse actuator 144 such that the recoat assembly 200 is positioned below (i.e., in the - Z direction of the coordinate axes depicted in the figures) the first guide 182 and the second guide 184. When the actuator assembly 102 is positioned over the cleaning station 110, the build platform 120, the supply platform 130, and the build material escapement assembly 300, as depicted in FIG. 1, the recoat assembly 200 is situated on the working axis 116 of the additive manufacturing system 100. Thus, bi-directional actuation of the recoat assembly transverse actuator 144 along the recoat motion axis 146 affects bi-directional motion of the recoat assembly 200 on the working axis 116 of the additive manufacturing system 100. In the embodiment of the actuator assembly 102 depicted in FIG. 1, the recoat assembly 200 is coupled to the recoat assembly transverse actuator 144 with a support bracket 176 such that the recoat assembly 200 is positioned on the working axis 116 of the additive manufacturing system 100 while still providing clearance between rail 180 of the actuator assembly 102 and the build platform 120, the supply platform 130, and the build material escapement assembly 300. In some embodiments described herein, the recoat assembly 200 may be fixed in directions orthogonal to the recoat motion axis 146 and the working axis 116 (i.e., fixed along the +/- Z axis and/or fixed along the +/- Y axis).

Similarly, the print head 150 is coupled to the print head actuator 154 such that the print head 150 is positioned below (e.g., in the - Z direction of the coordinate axes depicted in the figures) the first guide 182 and the second guide 184. When the actuator assembly 102 is positioned over the cleaning station 110, the build platform 120, the supply platform 130, and the build material escapement assembly 300, as depicted in FIG. 1, the print head 150 is situated on the working axis 116 of the additive manufacturing system 100. Thus, bi-directional actuation of the print head actuator 154 along the print motion axis 156 affects bi-directional motion of the print head 150 on the working axis 116 of the additive manufacturing system 100. In the embodiment of the actuator assembly 102 depicted in FIG. 1, the print head 150 is coupled to the print head actuator 154 with a support bracket 174 such that the print head 150 is positioned on the working axis 116 of the additive manufacturing system 100 while still providing clearance between rail 180 of the actuator assembly 102 and the build platform 120, the supply platform 130, and the build material escapement assembly 300. In some embodiments described herein, the print head 150 may be fixed in directions orthogonal to the print motion axis 156 and the working axis 116 (i.e., fixed along the +/- Z axis and/or fixed along the +/- Y axis).

While FIG. 1 schematically depicts an embodiment of an actuator assembly 102 which includes a first guide 182 and a second guide 184 with the recoat assembly transverse actuator 144 and the print head actuator 154 mounted thereto, respectively, it should be understood that other embodiments are contemplated and possible, such as embodiments which include more than two guides and more than two actuators. It should also be understood that other embodiments are contemplated and possible, such as embodiments which include the print head 150 and the recoat assembly 200 on the same actuator.

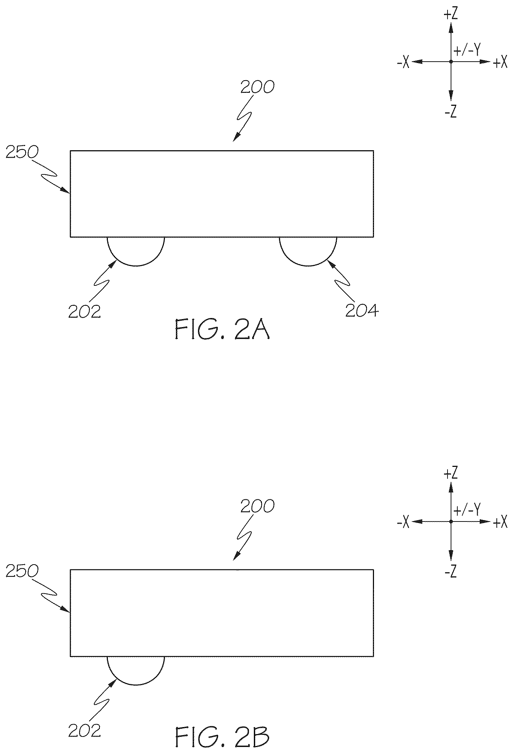

Referring now to FIGS. 2A and 2B, in some embodiments, the recoat assembly 200 includes a base member 250 coupled to the recoat assembly transverse actuator 144 (FIG. 1), which moves the base member 250 in a first lateral direction (i.e., in the -X direction) and a second lateral direction (i.e., the +X direction) opposite the first lateral direction. As referred to herein, the base member 250 may include any suitable structure of the recoat assembly 200 coupled to the recoat assembly transverse actuator 144, and may include a housing, a plate, or the like.

The recoat assembly 200 includes a build material spreading member (such as a powder spreading member) coupled to the base member 250. In embodiments, the powder spreading member includes rollers 202, 204. In embodiments, the second roller 204 is positioned rearward of the first roller 202 (i.e., in the - X direction as depicted). In these embodiments, the first roller 202 may generally be referred to as the "front" roller, and the second roller 204 may be referred to as the "rear" roller. Furthermore, it should be understood that although FIG. 2A depicts the recoat base member 250 as including first roller 202 and second roller 204, the recoat assembly 200 may include only a single roller 202 without departing from the scope of the present disclosure, as is illustrated in FIG. 2B.

Although not shown, it should be appreciated that, in some embodiments, the recoat assembly 200 further includes a first rotational actuator coupled to the first roller 202, and a second rotational actuator coupled to the second roller 204. In some embodiments, the first rotational actuator and the second rotational actuator are spaced apart from and coupled to the first roller 202 and the second roller 204, respectively, through a belt, a chain, or the like. In some embodiments, the recoat assembly 200 may include a single rotational actuator coupled to both the first roller 202 and the second roller 204. The first rotational actuator is configured to rotate the first roller 202 about a first rotation axis and the second rotational actuator is configured to rotate the second roller 204 about a second rotation axis. The first rotation axis and the second rotation axis are generally parallel to one another and are spaced apart from one another in the +/- X axis. The first roller 202 and the second roller 204 may be rotated in a "rotation direction" (e.g., a clockwise direction from the perspective shown in FIG. 2A) and/or a "counter-rotation direction" that is the opposite of the rotation direction (e.g., a counter-clockwise direction from the perspective shown in FIG. 2A). The first roller 202 and the second roller 204 can be rotated in the same direction or may be rotated in opposite directions from one another. The first rotational actuator and the second rotational actuator may include any suitable actuator for inducing rotation of the first roller 202 and the second roller 204, such as and without limitation, alternating current (AC) or direct current (DC) brushless motors, linear motors, servo motors, stepper motors, pneumatic actuators, hydraulic actuators, or the like.

In these embodiments, the rollers 202, 204 may be rotatably fixed within the recoat base member 250, such that the rollers 202, 204 may move in tandem with the recoat base member 250 as the recoat base member 250 is actuated. As such, the rollers 202, 204 may rotate in the rotation and counter-rotation direction, as has been described herein, and may translate with the recoat base member 250, but may not move in any orthogonal direction (e.g., in the +/- Y or +/- Z direction, as depicted in the coordinate axis of FIGS. 2A and 2B).

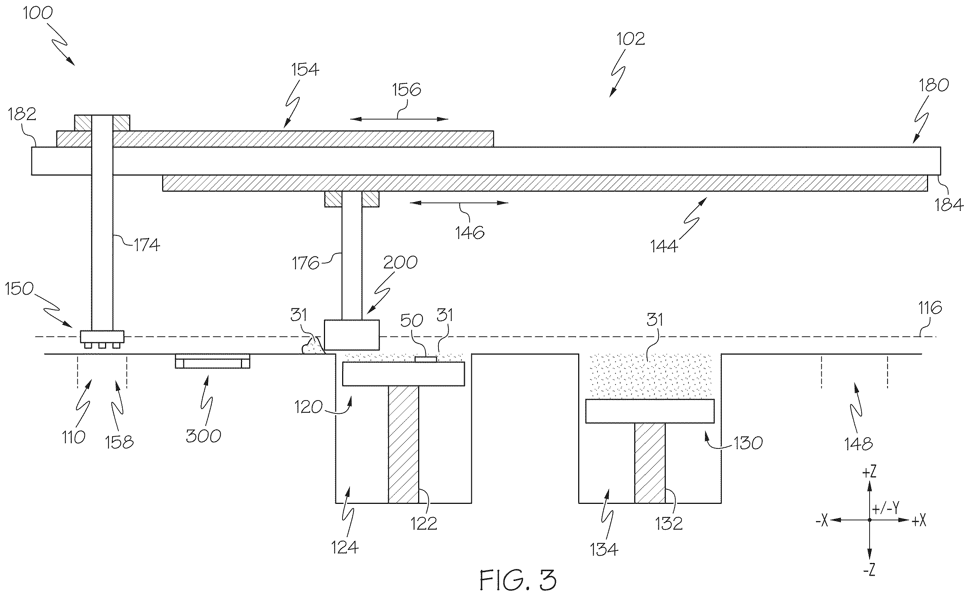

In operation, the recoat assembly 200 may move across the build area 124 in the - X direction, as depicted in FIG. 3, to perform a forward recoat (e.g., a recoat that distributes build material 31 from the supply platform 130 to the build area 124). In these embodiments, the first roller 202 and the second roller 204 may rotate in the counter-rotation direction, such that build material 31 is distributed from the supply platform 130 and onto the build platform 120 as the recoat assembly 200 performs the forward recoat.

As further depicted in FIG. 3, the movement of the recoat assembly 200 across the build area 124 during the forward recoat may cause excess build material 31 to collect outside the area of the build platform 120. As has been discussed herein, the collection of excess build material 31 may result in an uneven distribution of the build material 31 on the build platform 120, which may cause irregularities in the objects formed during an additive manufacturing process and inefficiencies in the process of forming the objects.

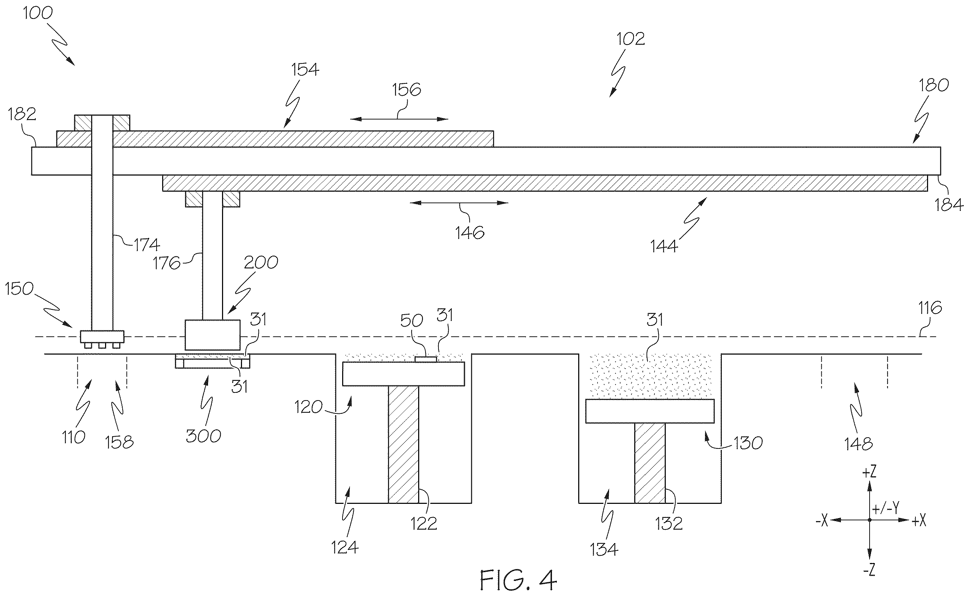

In order to evenly distribute the collection of excess build material 31, the recoat assembly 200 may continue to move in the - X direction such that the recoat assembly 200 forces the build material 31 into the build material escapement assembly 300, as is depicted in FIG. 4. In these embodiments, the build material escapement assembly 300 may receive the excess build material 31 in a cavity when the recoat assembly 200 performs the forward recoat. When the recoat assembly 200 prepares to perform a return recoat (e.g., moving the recoat assembly 200 in the - X direction as depicted in the coordinate axis of FIG. 3 towards the recoat home position 148) the build material escapement assembly 300 may be actuated to present the excess build material 31 to the recoat assembly 200, such that the recoat assembly 200 may distribute the excess build material 31 across the build platform 120 during the return recoat. The build material escapement assembly 300 will be described in additional detail herein, with reference to the relevant drawings.

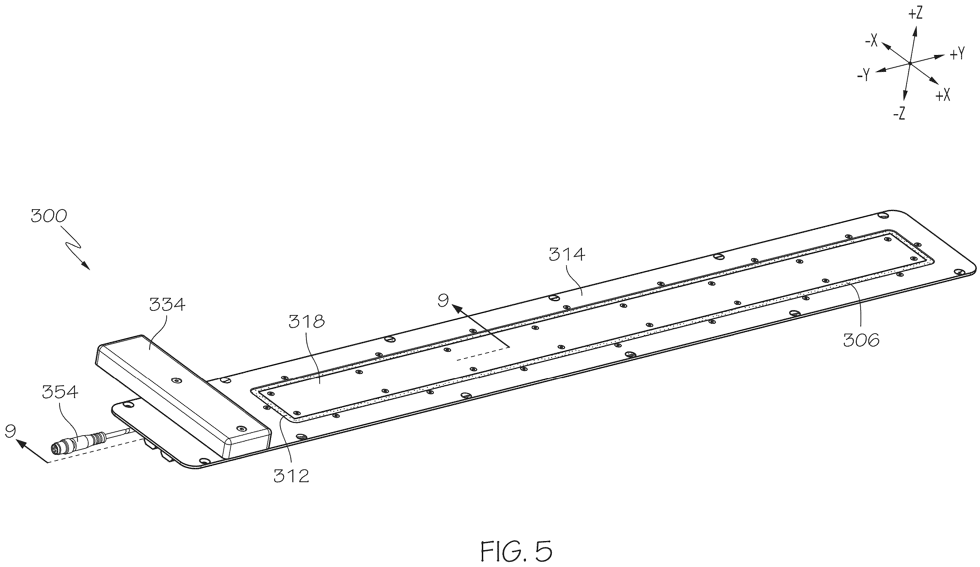

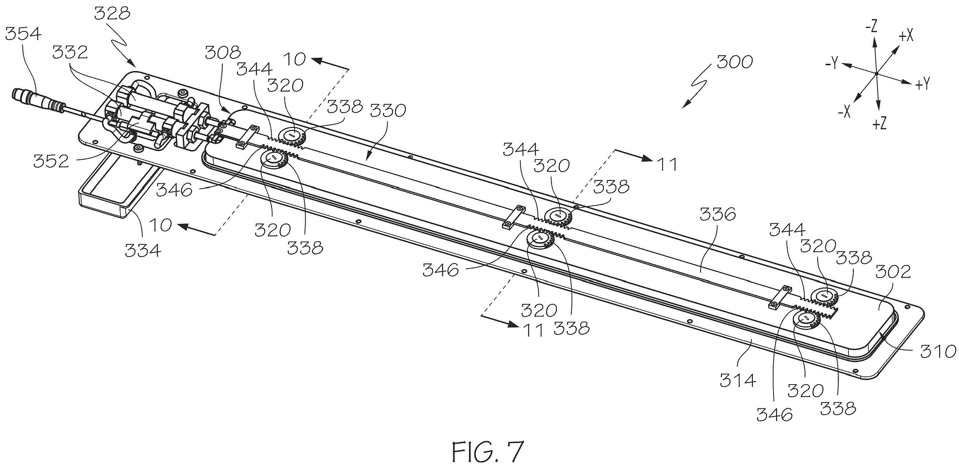

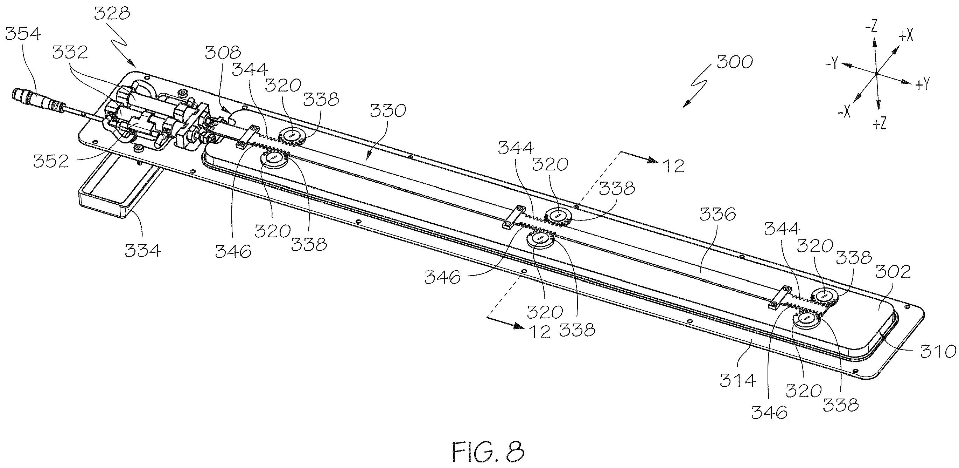

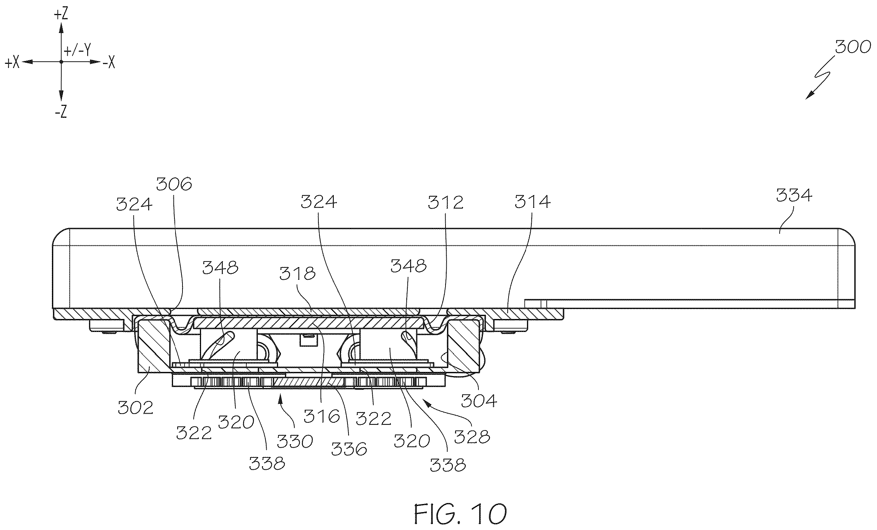

Referring now to FIGS. 5-12, the build material escapement assembly 300 is depicted. As shown in FIG. 10 the build material escapement assembly 300 may include a base 302 formed from a bottom wall and side walls surrounding and extending upwardly from the bottom wall. The base 302 defines a cavity 304 and an aperture 306 opening into the cavity 304. Said differently, the aperture 306 is positioned such that the cavity 304 opens upwardly through the aperture 306 in the + Z direction. As shown in FIGS. 7 and 8, the base 302 extends longitudinally in the +/- Y direction between a first base end 308 and a second base end 310. As such, the base 302 is positioned and oriented such that the recoat assembly 200 (FIG. 1) passes over the base 302 in the first lateral direction (i.e., in the -X direction) and the second lateral direction (i.e., in the +X direction).

As shown in FIGS. 5, 6, and 10, the build material escapement assembly 300 may further include a diaphragm 312. The diaphragm 312 extends at least partially across the aperture 306 and is coupled to the base 302. In some of the embodiments, the diaphragm 312 extends fully across the aperture such that the diaphragm 312 closes the aperture 306, preventing build material 31 from entering the cavity 304. The diaphragm 312 may be formed from an elastically deformable material, such as an elastomer, that allows the diaphragm 312 to stretch, bend, or otherwise deform. It is to be appreciated that the diaphragm 312 may be formed from a polymer, or any other material that allows for elastic deformation.

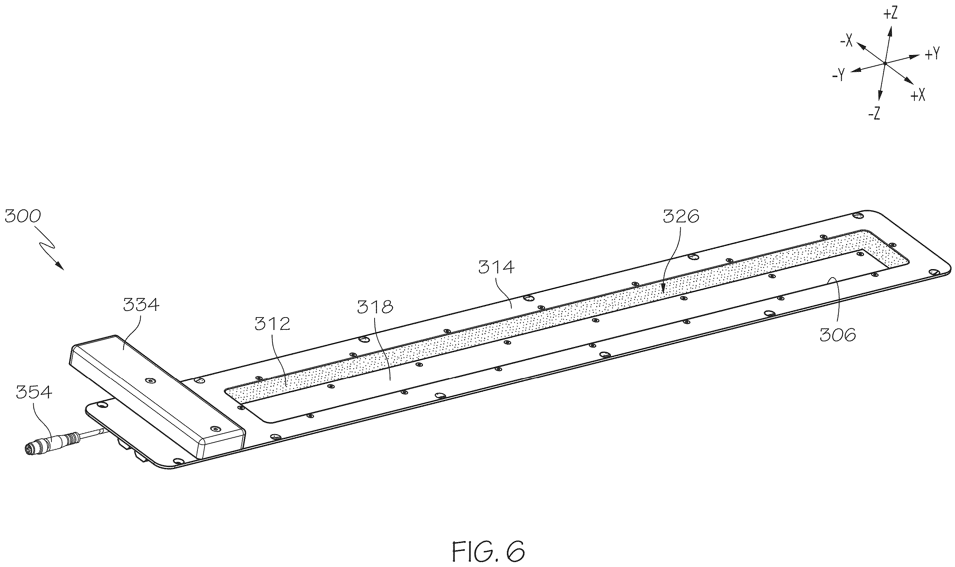

As shown in FIGS. 5 and 6, the build material escapement assembly 300 may further include a retaining plate 314 configured to couple the build material escapement assembly 300 to the additive manufacturing system 100 (FIG. 1). For example, the retaining plate 314 may be coupled to the additive manufacturing system 100 by a plurality of fasteners (e.g., pins, screws, bolts, etc.). The retaining plate 314 may lie flush with a surface of the build area 124 (FIG. 1), such that the recoat assembly 200 may push excess build material 31 onto the build material escapement assembly 300.

As shown in FIGS. 10-12, the diaphragm 312 is disposed between and coupled to each of the base 302 and the retaining plate 314. For example, the base 302, the diaphragm 312, and the retaining plate 314 may be fixedly coupled to one another by a plurality of fasteners (e.g., pins, screws, bolts, etc.). The plurality of fasteners may extend between the base 302 and the retaining plate 314 and through the diaphragm 312. The base 302 and the retaining plate 314 may be drawn toward one another, sandwiching the diaphragm 312 therebetween. Furthermore, an adhesive may be used to bond the diaphragm 312 to the base 302 and/or the retaining plate 314 to form a fluid-tight seal between the diaphragm 312 and the base 302 and/or the retaining plate 314, thereby ensuring that the cavity 304 is sealed.

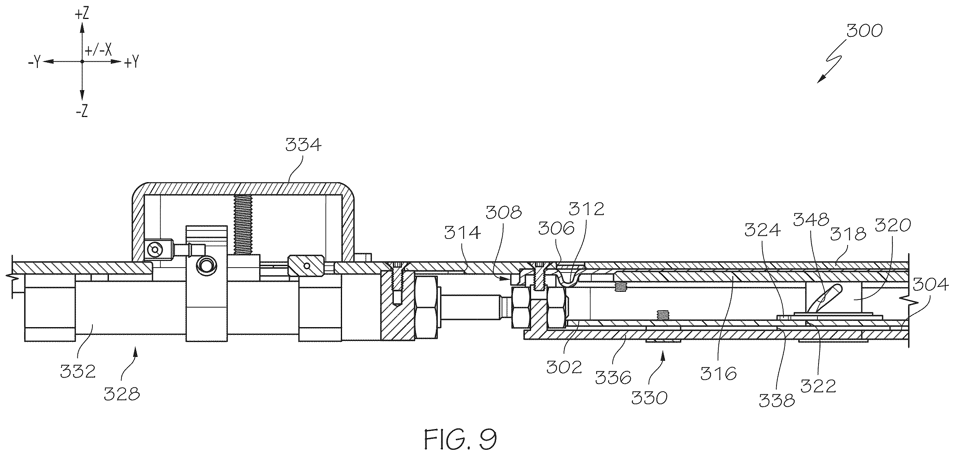

As shown in FIGS. 9 and 10, the build material escapement assembly 300 may further include a plate 316 (referred to herein as a retractable plate 316) disposed within the cavity 304. The retractable plate 316 is disposed below the diaphragm 312 in the +/- Z direction. The retractable plate 316 may be sized and shaped to extend within, and generally fill, the cavity 304 of the base 302 in the +/- X direction and the +/-Y direction, but is movable within the cavity 304 in the +/- Z direction.

The build material escapement assembly 300 may further include a top plate 318. The diaphragm 312 may be disposed between and coupled to each of the retractable plate 316 and the top plate 318. More specifically, the top plate 318 may be sized and shaped to generally match the retractable plate 316 in the +/- X direction and the +/-Y direction, as shown in FIGS. 5 and 6. The retractable plate 316, the diaphragm 312, and the top plate 318 may be fixedly coupled to one another by a plurality of fasteners (e.g., pins, screws, bolts, etc.). The plurality of fasteners may extend between the retractable plate 316 and the top plate 318 and through the diaphragm 312. The retractable plate 316 and the top plate 318 may be drawn toward one another, sandwiching the diaphragm 312 therebetween. Furthermore, an adhesive may be used to bond the diaphragm 312 to the retractable plate 316 and/or the top plate 318 to form a fluid-tight seal between the diaphragm 312 and the retractable plate 316 and/or the top plate 318, thereby ensuring that the cavity 304 is sealed. It is to be appreciated that in other embodiments the diaphragm 312 may extend only from the retractable plate 316 to the base 302 such that the diaphragm 312 has a generally ring-shape configuration.

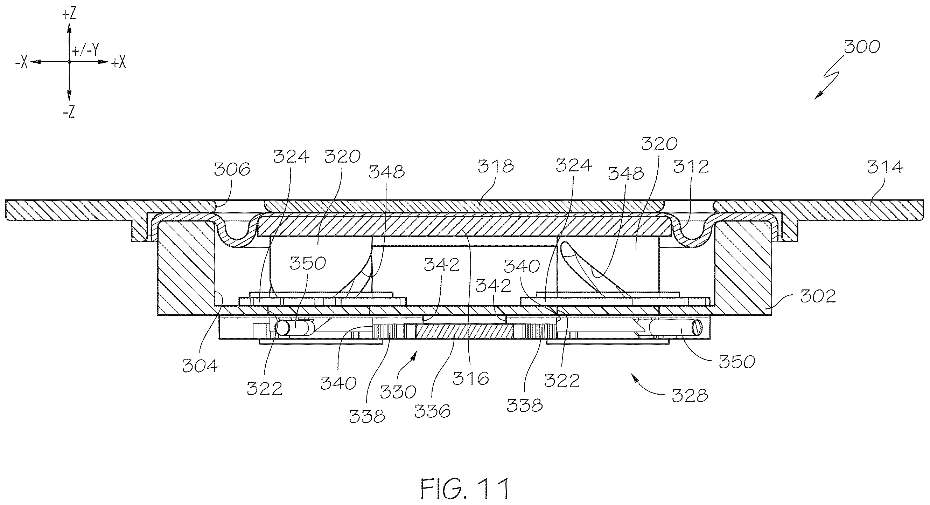

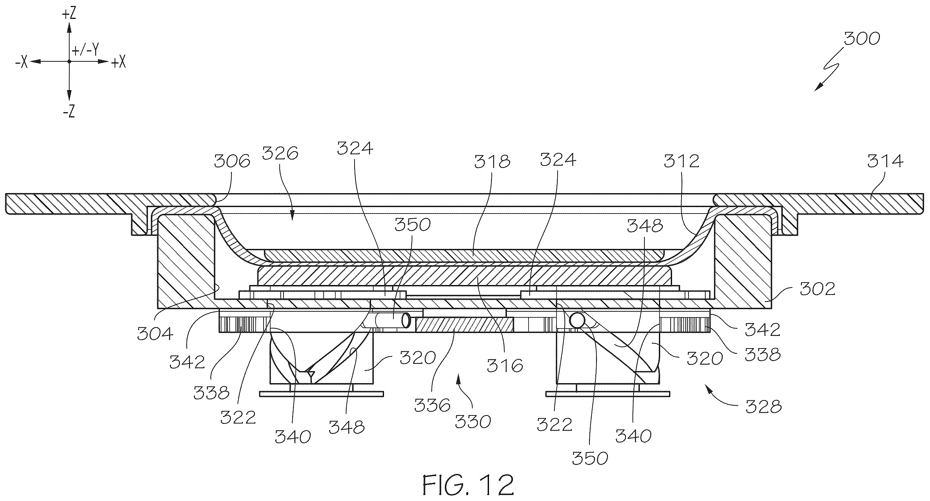

The build material escapement assembly 300 may further include a plurality of posts 320 disposed within the cavity 304 beneath the diaphragm 312 and coupled to the retractable plate 316, as shown in FIGS. 9-12. The plurality of posts 320 are supported by the base 302 and movable with the retractable plate 316 between a retracted position (see FIG. 12) and an extended position (see FIG. 11). As shown in FIGS. 7 and 8, the plurality of posts 320 is comprised of six posts 320 spaced from one another along the base 302. However, any suitable number of posts 320 may be utilized.

As shown in FIGS. 9-12, the plurality of posts 320 extend vertically in the +/- Z direction. The base 302 may define a plurality of holes 322 through which the plurality of posts 320 individually extend. As such, the plurality of posts 320 extend through the plurality of holes 322 and are at least partially disposed within the cavity 304 of the base 302. The plurality of posts 320 and the plurality of holes 322 are correspondingly configured (e.g., in size and shape) to allow movement of the plurality of posts 320 in the +/- Z direction while limiting movement in the +/X direction and the +/- Y direction. The base 302 may include a plurality of bushings 324 individually defining the plurality of holes 322. The plurality of bushings 324 may be formed of a material with reduced friction and wear properties compared to the remainder of the base 302, which allows movement between the plurality of posts 320 and the plurality of bushings 324.

Because the diaphragm 312 and the top plate 318 are mounted to the retractable plate 316, the plurality of posts 320, the retractable plate 316, the diaphragm 312, and the top plate 318 move together in unison between the extended position (see FIG. 11) and the retracted position (see FIG. 12). When the plurality of posts 320, the retractable plate 316, the diaphragm 312, and the top plate 318 are in the extended position, the build material escapement assembly 300 is in an extended state. When the plurality of posts 320, the retractable plate 316, the diaphragm 312, and the top plate 318 are in the retracted position, the build material escapement assembly 300 is in a retracted state.

In the extended position, as shown in FIG. 11 and described in more detail herein, the plurality of posts 320, the retractable plate 316, the diaphragm 312, and the top plate 318 are raised within the cavity 304. The top plate 318 is flush with the retaining plate 314 in the extended position, which presents the build material 31 to the recoat assembly 200 as it moves in the second lateral direction.

In the retracted position, as shown in FIG. 12 and described in more detail herein, the plurality of posts 320, the retractable plate 316, the diaphragm 312, and the top plate 318 are lowered within the cavity 304 such that the retractable plate 316 is adjacent or in contact with the base 302. The portion of the diaphragm 312 extending between the retractable plate 316 and the base 302 deforms to allow movement to the retracted position. The top plate 318 of the build material escapement assembly 300 is offset from the retaining plate 314 such that the top plate 318 is positioned beneath the retaining plate 314 in the retracted position. The diaphragm 312 and the top plate 318 define a collection void 326 within the cavity 304 of the base 302 that accepts excess build material 31 as the recoat assembly 200 (FIG. 1) moves in the first lateral direction.

With reference again to FIGS. 7 and 8, the build material escapement assembly 300 may further include a drive assembly 328 coupled to the plurality of posts 320 and configured to move the plurality of posts 320 between the retracted position and the extended position. The drive assembly 328 may include a drivetrain 330 coupled to the plurality of posts 320. The drive assembly 328 may further include an actuator 332 coupled to the drivetrain 330. More specifically, in the embodiment shown, the drive assembly 328 includes a pair of actuators 332 that are both coupled to the drivetrain 330. However, any number of actuators 332 may be used. The pair of actuators 332 may be configured as pneumatic actuators that utilize pressurized air to move between the elongated position and the shortened position. However, the pair of actuators 332 may be configured as hydraulic actuators, electric actuators, or any other suitable actuators.

The build material escapement assembly 300 includes a housing 334 disposed at the first base end 308 of the base 302 and mounted to the retaining plate 314. The pair of actuators 332 are mounted to the housing 334, thereby fixedly coupling the pair of actuators 332 to the base 302 (see FIG. 9).

Referring still to FIGS. 7 and 8, the drivetrain 330 comprises a rack gear 336 coupled to the actuator and a plurality of pinion gears 338 coupled to and rotatable relative to the base 302. The plurality of pinion gears 338 are disposed individually adjacent the plurality of posts 320. Each of the plurality of pinion gears 338 are meshed with the rack gear 336. As shown, the plurality of pinion gears 338 is comprised of six pinion gears 338 spaced from one another along the base 302 and individually corresponding with the six posts 320. As shown in FIGS. 11 and 12, each of the plurality of pinion gears 338 defines a bore 340 extending therethrough in the +/- Z direction. The plurality of pinion gears 338 are individually aligned with the plurality of posts 320 such that the posts 320 extend through the bores 340. Each of the plurality of pinion gears 338 are rotatably coupled to the base 302 by a bearing 342 to allow rotation therebetween.

As shown in FIGS. 7 and 8, the rack gear 336 extends parallel and adjacent to a length of the base 302 (e.g., in the +/- Y direction) such that the rack gear 336 is arranged coplanar with the plurality of pinion gears 338. The rack gear 336 includes first teeth 344 extending between the first base end 308 and the second base end 310. The rack gear 336 further includes second teeth 346 disposed opposite the first teeth 344 and extending between the first base end 308 and the second base end 310. The plurality of pinion gears 338 are arranged such that half of the plurality of pinion gears 338 mesh with the first teeth 344 and the other half of the plurality of pinion gears 338 mesh with the second teeth 346. However, any number of the plurality of pinion gears 338 may be meshed with the first teeth 344 or the second teeth 346. The first teeth 344 and the second teeth 346 are shown in FIGS. 7 and 8 to be discontinuous and are disposed in sections adjacent the plurality of pinion gears 338. However, the first teeth 344 and the second teeth 346 may extend continuously along the rack gear 336.

As shown in FIGS. 11 and 12, the plurality of posts 320 may each define a groove 348 having a helical configuration. The build material escapement assembly 300 may further include a plurality of pins 350 individually extending from the plurality of pinion gears 338. The plurality of pins 350 individually engage the plurality of posts 320 within the groove 348. For simplicity, the engagement and movement of the rack gear 336 with one of the pinion gears 338 and the corresponding engagement of one of the plurality of pins 350 with one of the plurality of posts 320 will be described in detail below, the description of which is applicable to all of the plurality of pinion gears 338, the plurality of pins 350, and the plurality of posts 320.

The engagement between the rack gear 336 and the pinion gear causes the movement of the rack gear 336 to transfer into rotation of the pinion gear. The pin 350 rotates with the pinion gear 338 and engages the post 320 within the groove 348. The helical configuration of the groove 348 extends around the post 320 and vertically in the +/- Z direction. As such, the rotation of the pin 350 about the post 320 causes the pin 350 to slide along the groove 348, which translates the post 320 and the retractable plate 316 in the +/- Z direction between the extended position and the retracted position.

The pair of actuators 332 are configured to move the drivetrain 330 which moves the post 320 between the retracted position and the extended position. In the embodiment shown in FIGS. 7 and 8, the pair of actuators 332 are each a linear actuator configured to translate the rack gear 336. More specifically, the pair of actuators 332 are aligned longitudinally with the rack gear 336 in the +/- Y direction and linearly translate the rack gear 336 in the +/- Y direction. The pair of actuators 332 move between an elongated position (as shown in FIG. 7) and a shortened position (as shown in FIG. 8). In the elongated position, the pair of actuators 332 are extended such that the rack gear 336 is closer to the second base end 310 than when in the shortened position. The elongated position of the pair of actuators 332 corresponds with the extended position of the retractable plate 316 and the plurality of posts 320. The shortened position of the pair of actuators 332 corresponds with the retracted position of the retractable plate 316 and the plurality of posts 320.

The build material escapement assembly 300 further includes a position sensor 352 configured to monitor the pair of actuators 332 to determine when the retractable plate 316 is in the retracted position or the extended position. The position sensor 352 may monitor the location of the pair of actuators 332 between the elongated position and the shortened position. As the actuators 332 are mechanically connected to the retractable plate 316 (through the rack gear 336, the plurality of pinion gears 338, the plurality of pins 350, the plurality of posts 320, etc.), the position of the actuators 332 between the elongated position and the shortened position directly corresponds with the position of the retractable plate 316 between the extended position and the retracted position. Therefore, the position sensor 352 may be used to interpret the position of the retractable plate 316 (moreover, the top plate 318 coupled to the retractable plate 316 and upon which build material 31 may be disposed) by monitoring the position of the pair of actuators 332.

It should be noted that monitoring the position of the top plate 318 may be of significance for a variety of reasons. For example, a user may be able to determine if a mechanical failure has occurred within the build material escapement assembly 300 by monitoring the position of the top plate 318 relative to the retaining plate 314. Furthermore, this may allow a user to ensure that build material 31 is not presented when unintended, such as when the print head 150 is disposing binder material 50 on the build platform 120. Moreover, monitoring of the top plate 318 with the position sensor 352 resulting in an indication that a mechanical failure has occurred can result in a stoppage of the print head 150, the recoat assembly 200, illumination of a warning indicator, etc.

The pair of actuators 332 and the position sensor 352 may be coupled to a connector 354 that is configured to provide electronic communication thereto. The connector 354 may provide an electrical connection to an electronic control unit that may provide control of the pair of actuators 332. Therefore, the electronic control unit may direct the movement of the retractable plate 316 between the extended and retracted positions.

In the retracted position (as shown in FIG. 12), the top plate 318 may be offset from the retaining plate 314, such that the top plate 318 is positioned beneath the retaining plate 314. The retractable plate 316 is moved to the retracted position when the recoat assembly moves in the first lateral direction. The recoat assembly 200 (FIG. 1) pushes the build material 31 from the build area 124 and into the build material escapement assembly 300 when the recoat assembly moves in the first lateral direction. More specifically, in the retracted position, excess build material 31 may be pushed from the build area 124 onto the top plate 318, such that the excess build material 31 is positioned below the retaining plate 314. By positioning the excess build material 31 beneath the retaining plate 314, the recoat assembly 200 may move past the build material escapement assembly 300 without disrupting or distributing the excess build material 31 outside of the build area 124.

Once the recoat assembly 200 has moved beyond the build material escapement assembly 300, the top plate 318 may be actuated to the extended position. More specifically, the build material escapement assembly 300 may be moved to the extended position when the recoat assembly 200 moves in the second lateral direction. In the extended position (as shown in FIG. 11), the top plate 318 may lie flush with the retaining plate 314, such that the excess build material 31 is presented to the recoat assembly 200. The recoat assembly 200 may push the build material 31 from the top plate 318 of the build material escapement assembly 300 and onto the build area 124 when the recoat assembly moves in the second lateral direction (i.e., when the recoat assembly 200 begins the return recoat). The rollers 202, 204 of the recoat assembly 200 will distribute the excess build material 31 across the build platform 120.

It is to be appreciated that while the build material escapement assembly 300 is described above to be used with the additive manufacturing system 100 shown in FIGS. 1-4, the build material escapement assembly 300 may be utilized with other additive manufacturing systems not described herein and shown in the Figures. Furthermore, the drive assembly 328 of the build material escapement assembly 300 may vary from the embodiments shown and described herein. For example, the drive assembly 328 may include a plurality of linear actuators individually mounted to, and aligned with, the plurality of posts 320 to directly drive the plurality of posts 320 between the extended position and the retracted position. In another example, the drive assembly may include a plurality of linkages that extended between the pair of actuators 332 that plurality of posts 320, with plurality of linkages configured to translate, rotate, articulate, or otherwise move to transfer movement from the pair of actuators 332 to the plurality of posts 320.

From the above, it is to be appreciated that defined herein are build material escapement assemblies for an additive manufacturing system. Build material escapement assemblies may include a base defining a cavity and an aperture opening into the cavity, a diaphragm extending at least partially across the aperture and coupled to the base, and a plate disposed within the cavity and coupled to the diaphragm. Build material escapement assemblies may further include a post disposed within the cavity beneath the diaphragm and coupled to the plate, the post supported by the base and movable with the plate between a retracted position and an extended position. Build material escapement assemblies may further include a drive assembly coupled to the post and configured to move the post between the retracted position and the extended position.

The embodiments described herein utilize the drive assembly coupled to the post and configured to move the post between the retracted position and the extended position. The mechanical engagement between the drive assembly and the post allows for precise control of the position of the plate. Furthermore, the use of the rack gear and the pinion gears extending along the base provides for compact packaging of the build material escapement assembly in the +/- Z direction, improving use across various additive manufacturing systems.

Further aspects of the embodiments described herein are provided by the subject matter of the following clauses:

A build material escapement assembly for an additive manufacturing system, the build material escapement assembly comprising: a base defining a cavity and an aperture opening into the cavity; a diaphragm extending at least partially across the aperture and coupled to the base; a plate disposed within the cavity and coupled to the diaphragm; a post disposed within the cavity beneath the diaphragm and coupled to the plate, the post supported by the base and movable with the plate between a retracted position and an extended position; and a drive assembly coupled to the post to move the post between the retracted position and the extended position.

The build material escapement assembly of any preceding clause, wherein the drive assembly comprises: a drivetrain coupled to the post; and an actuator coupled to the drivetrain, the actuator moving the drivetrain to move the post between the retracted position and the extended position.

The build material escapement assembly of any preceding clause, wherein the drivetrain comprises: a rack gear coupled to the actuator; and a pinion gear coupled to and rotatable relative to the base adjacent the post, the pinion gear meshed with the rack gear.

The build material escapement assembly of any preceding clause, wherein the post defines a groove having a helical configuration, and further comprising a pin extending from the pinion gear and engaging the groove of the post.

The build material escapement assembly of any preceding clause, wherein the rack gear extends parallel to a length of the base.

The build material escapement assembly of any preceding clause, wherein the actuator comprises a linear actuator to translate the rack gear.

The build material escapement assembly of any preceding clause, wherein the plate is a retractable plate and further comprising a top plate, the diaphragm disposed between and coupled to the retractable plate and the top plate.

The build material escapement assembly of any preceding clause, further comprising a retaining plate coupled to the base, the top plate flush with the retaining plate in the extended position.

The build material escapement assembly of any preceding clause, wherein the diaphragm is disposed between and coupled to the base and the retaining plate.

The build material escapement assembly of any preceding clause, further comprising a position sensor monitoring the actuator to determine when the plate is in the retracted position or the extended position.

An additive manufacturing system comprising: a supply platform for supplying build material to the additive manufacturing system; a build area for receiving the build material; a recoat assembly comprising: a base member movable in a first lateral direction and a second lateral direction opposite the first lateral direction; and a build material spreading member coupled to the base member; and a build material escapement assembly comprising: a base defining a cavity and an aperture opening into the cavity; a diaphragm extending at least partially across the aperture and coupled to the base; a plate disposed within the cavity and coupled to the diaphragm; a post disposed within the cavity beneath the diaphragm and coupled to the plate, the post supported by the base and movable with the plate between a retracted position and an extended position; and a drive assembly coupled to the post to move the post between the retracted position and the extended position.

The additive manufacturing system of any preceding clause, wherein the recoat assembly pushes the build material from the build area and into the build material escapement assembly when the recoat assembly moves in the first lateral direction.

The additive manufacturing system of any preceding clause, wherein the plate of the build material escapement assembly is moved to the retracted position when the recoat assembly moves in the first lateral direction.

The additive manufacturing system of any preceding clause, wherein the plate is a retractable plate and wherein the build material escapement assembly further comprises a top plate, the diaphragm disposed between and coupled to the retractable plate and the top plate.

The additive manufacturing system of any preceding clause, wherein the recoat assembly pushes the build material from the top plate of the build material escapement assembly and onto the build area when the recoat assembly moves in the second lateral direction.

The additive manufacturing system of any preceding clause, further comprising a retaining plate coupling the build material escapement assembly to the additive manufacturing system, wherein the top plate of the build material escapement assembly is offset from the retaining plate such that the top plate is positioned beneath the retaining plate in the retracted position.

The build material escapement assembly of any preceding clause, wherein the top plate of the build material escapement assembly lies flush with the retaining plate in the extended position.

The additive manufacturing system of any preceding clause, wherein the plate of the build material escapement assembly is moved to the extended position when the recoat assembly moves in the second lateral direction.

The additive manufacturing system of any preceding clause, wherein the drive assembly comprises a drivetrain coupled to the post and an actuator coupled to the drivetrain, the actuator moving the drivetrain to move the post between the retracted position and the extended position.

A build material escapement assembly for an additive manufacturing system, the build material escapement assembly comprising: a base defining a cavity and an aperture opening into the cavity; a diaphragm extending across the aperture and coupled to the base; a plate disposed within the cavity and coupled to the diaphragm; a top plate, the diaphragm disposed between and coupled to the plate and the top plate; a post disposed within the cavity beneath the diaphragm and coupled to the plate, the post defining a groove having a helical configuration, the post supported by the base and movable with the plate between a retracted position and an extended position; an actuator; and a drivetrain comprising: a rack gear coupled to the actuator; a pinion gear coupled to and rotatable relative to the base adjacent the post, the pinion gear meshed with the rack gear; and a pin extending from the pinion gear and engaging the groove of the post, wherein the actuator moves the drivetrain to move the post between the retracted position and the extended position.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A build material escapement assembly (300) for an additive manufacturing system (100), the build material escapement assembly (300) comprising:
a base (302) defining a cavity (304) and an aperture (306) opening into the cavity (304);
a diaphragm (312) extending across the aperture (306) and coupled to the base (302);
a retractable plate (316) disposed within the cavity (304) and coupled to the diaphragm (312);
a post (320) disposed within the cavity (304) beneath the diaphragm (312) and coupled to the retractable plate (316), the post (320) supported by the base (302) and movable with the retractable plate (316) between a retracted position and an extended position; and
a drive assembly (328) coupled to the post (320) to move the post (320) between the retracted position and the extended position.

2. The build material escapement assembly (300) of claim 1, wherein the drive assembly (328) comprises:
a drivetrain (330) coupled to the post (320); and
an actuator (332) coupled to the drivetrain (330), the actuator (332) moving the drivetrain (330) to move the post (320) between the retracted position and the extended position.

3. The build material escapement assembly (300) of claim 2, wherein the drivetrain (330) comprises:
a rack gear (336) coupled to the actuator (332); and
a pinion gear (338) coupled to and rotatable relative to the base (302) adjacent the post (320), the pinion gear (338) meshed with the rack gear (336).

4. The build material escapement assembly (300) of claim 3, wherein the post (320) defines a groove (348) having a helical configuration, and further comprising a pin (350) extending from the pinion gear (338) and engaging the groove (348) of the post (320).

5. The build material escapement assembly (300) of any one of claims 3 or 4, wherein the rack gear (336) extends parallel to the base (302).

6. The build material escapement assembly (300) of any one of claims 3-5, wherein the actuator (332) comprises a linear actuator (332) to translate the rack gear (336).

7. The build material escapement assembly (300) of any one of claims 1-6, further comprising a top plate (318), the diaphragm (312) disposed between and coupled to the retractable plate (316) and the top plate (318).

8. The build material escapement assembly (300) of claim 7, further comprising a retaining plate (314) coupled to the base (302), the top plate (318) flush with the retaining plate (314) in the extended position.

9. The build material escapement assembly (300) of claim 8, wherein the diaphragm (312) is disposed between and coupled to the base (302) and the retaining plate (314).

10. The build material escapement assembly (300) of any one of claims 2-6, further comprising a position sensor (352) monitoring the actuator (332) to determine when the retractable plate (316) is in the retracted position or the extended position.

11. An additive manufacturing system (100) comprising:
a supply platform (130) for supplying build material (31) to the additive manufacturing system (100);
a build area (124) for receiving the build material (31);
a recoat assembly (200) comprising:
a base member (250) movable in a first lateral direction and a second lateral direction opposite the first lateral direction; and
a build material (31) spreading member coupled to the base member (250); and
a build material escapement assembly (300) comprising:
a base (302) defining a cavity (304) and an aperture (306) opening into the cavity (304);
a diaphragm (312) extending across the aperture (306) and coupled to the base (302);
a retractable plate (316) disposed within the cavity (304) and coupled to the diaphragm (312);
a post (320) disposed within the cavity (304) beneath the diaphragm (312) and coupled to the retractable plate (316), the post (320) supported by the base (302) and movable with the retractable plate (316) between a retracted position and an extended position; and
a drive assembly (328) coupled to the post (320) to move the post (320) between the retracted position and the extended position.

12. The additive manufacturing system (100) of claim 11, wherein the recoat assembly (200) pushes the build material (31) from the build area (124) and into the build material escapement assembly (300) when the recoat assembly (200) moves in the first lateral direction.

13. The additive manufacturing system (100) of claim 12, wherein the retractable plate (316) of the build material escapement assembly (300) is moved to the retracted position when the recoat assembly (200) moves in the first lateral direction.

14. The additive manufacturing system (100) of any one of claims 11-13, wherein the build material escapement assembly (300) further comprises a top plate (318), the diaphragm (312) disposed between and coupled to the retractable plate (316) and the top plate (318).

15. The additive manufacturing system (100) of claim 14, wherein the recoat assembly (200) pushes the build material (31) from the top plate (318) of the build material escapement assembly (300) and onto the build area (124) when the recoat assembly (200) moves in the second lateral direction.
